# EUROPÄISCHE PATENTSCHRIFT

(11) **EP 3 303 018 B1**
(45) Veröffentlichungstag und Bekanntmachung des Hinweises auf die Patenterteilung: **06.11.2019**
(21) Anmeldenummer: 16722080.5
(22) Anmeldetag: 25.04.2016
(51) Int. Cl.: B60G 7/00, B62D 7/06

(54) **ACHSANORDNUNG FÜR EIN FAHRZEUG**
AXLE ASSEMBLY FOR A VEHICLE
ENSEMBLE DE TRAIN DE SUSPENSION POUR UN VÉHICULE

(30) Priorität: 28.05.2015 DE 102015209845
(43) Veröffentlichungstag der Anmeldung: 11.04.2018
(73) Patentinhaber: ZF Friedrichshafen AG, 88046 Friedrichshafen (DE)
(72) Erfinder: NEU, Alexander, 88048 Friedrichshafen (DE); HEIDSIECK, Knut, 32257 Buende (DE); KONTERMANN, Peter, 49090 Osnabrück (DE); LOHMÜLLER, Holger, 49191 Belm (DE); MÜHL, Nils, 88045 Friedrichshafen (DE); GREVEMEYER, Philipp, 49078 Osnabrück (DE)
(86) Internationale Anmeldenummer: PCT/EP2016/059152
(87) Internationale Veröffentlichungsnummer: WO 2016/188685

(56) Entgegenhaltungen:
- EP-A1- 0 345 123
- WO-A1-2013/185870
- GB-A- 2 333 576
- US-A- 2 872 206
- US-A- 5 782 484
- US-A- 5 820 150
- US-A1- 2004 108 674
- US-A1- 2005 212 244
- US-A1- 2006 175 105
- US-B1- 6 719 314

## Beschreibung

Die vorliegende Erfindung betrifft eine Achsanordnung für ein Fahrzeug mit den oberbegrifflichen Merkmalen nach Anspruch 1.

Bei Achsanordnungen für neuartige Mobilitätskonzepte, die z. B. Lenkwinkel von wenigstens +/- 50°bis zu +/- 90°ermöglichen, wird die Fahrwerkskinematik im Vergleich zu herkömmlichen Achsanordnungen mit maximalen Lenkwinkeln von +/- 50° komplexer, da zusätzliche Bauelemente benötigt werden. Trotz der zusätzlich nötigen Bauelemente in der Achsanordnung bleibt der für die Achsanordnung zur Verfügung stehende Bauraum gleich. Daher ist eine effektive und optimierte Nutzung des zur Verfügung stehenden Bauraums obligatorisch.

Aus der DE 10110492 A1 ist ein Lenker, insbesondere ein Querlenker für eine Radaufhängung bekannt. Dieser umfasst zwei Lagerelemente und ein einschaliges Verbindungselement, das die Lagerelemente miteinander verbindet. Das Verbindungselement umfasst einen Steg, welcher als ebene und einstückige Platte ausgeformt ist. Der Steg weist zudem eine bogenförmige gekröpfte Grundform auf.

Des Weiteren sind Achsanordnungen bekannt bei denen gekröpfte Zug- oder Druckstreben als Querlenker verwendet werden.

Das Dokument EP 0 345 123 A1 offenbart eine Achsanordnung für ein Fahrzeug nach dem Oberbegriff des Anspruchs 1.

Der vorliegenden Erfindung liegt ausgehend vom Stand der Technik die Aufgabe zu Grunde, eine Achsanordnung mit einem verbesserten Querlenker vorzuschlagen, der es zulässt einen zur Verfügung stehenden Bauraum für die Achsanordnung effektiv und so gut wie möglich zu nutzen. Der Querlenker der Achsanordnung soll zudem kostengünstig herstellbar sein.

Die vorliegende Erfindung schlägt ausgehend von der vorgenannten Aufgabe eine Achsanordnung für ein Fahrzeug mit den Merkmalen nach Patentanspruch 1 vor. Weitere vorteilhafte Ausgestaltungen und Weiterbildungen gehen aus den Unteransprüchen hervor.

Ein Querlenker der Achsanordnung für ein Fahrzeug umfasst zwei Querlenkerstreben und wenigstens drei Kinematikpunkte. Jede der zwei Querlenkerstreben weist ein radträgerseitiges Ende und ein karosserieseitiges Ende auf. Wenigstens eine der zwei Querlenkerstreben weist eine Krümmung in eine Raumrichtung auf, wobei diese Raumrichtung eine Hochachse zu einer Ebene ist, die durch die wenigstens drei Kinematikpunkte aufgespannt wird.

Wird der Querlenker in einer Achsanordnung eines Fahrzeugs verwendet, ist er quer zu einer Fahrtrichtung eingebaut und gelenkig mit dem Radträger und z. B. der Fahrzeugkarosserie verbunden. Die Achsanordnung weist weitere Bauelemente auf, beispielsweise eine Spurstange, ein Feder- oder Dämpferbein, einen Radträger, ein Lenkgetriebe oder einen weiteren Fahrwerklenker. Der erfindungsgemäße Querlenker kann ein oberer Querlenker oder ein unterer Querlenker der Achsanordnung sein. Selbstverständlich kann die Achsanordnung auch zwei gleichförmig ausgestaltete Querlenker aufweisen.

Der Querlenker weist zwei, vorzugsweise voneinander verschieden ausgeformte Querlenkerstreben auf. Eine erste der zwei Querlenkerstreben weist ein radträgerseitiges Ende und ein karosserieseitiges Ende aus. Eine zweite der zwei Querlenkerstreben weist ein radträgerseitiges Ende und ein karosserieseitiges Ende auf. Der Querlenker kann also als ein Dreiecksquerlenker ausgeformt sein. Das karosserieseitige Ende einer Querlenkerstrebe ist dasjenige Ende, welches sich bei der Verwendung des Querlenkers in der Achsanordnung eines Fahrzeugs z. B. an einer Fahrzeugkarosserie abstützt. Das radträgerseitige Ende einer Querlenkerstrebe ist dasjenige Ende, welches bei der Verwendung des Querlenkers in der Achsanordnung eines Fahrzeugs mit dem Radträger der Achsanordnung verbunden ist. Die Nummerierung dient hier und im gesamten Text nur der leichteren Unterscheidbarkeit und deutet keine Vorrangigkeit an.

Ein Kinematikpunkt ist hierbei ein Bereich des Querlenkers, an welchem dieser Querlenker mit anderen Bauelementen der Achsanordnung oder des Fahrzeugs gelenkig verbunden werden kann, wenn der Querlenker in der Achsanordnung eines Fahrzeugs verwendet wird. Eine Querlenkerstrebe wird von zwei Kinematikpunkten begrenzt. In anderen Worten erstreckt sich eine Querlenkerstrebe des Querlenkers von einem ersten Kinematikpunkt zu einem zweiten Kinematikpunkt, wobei der erste Kinematikpunkt an dem karosserieseitigen Ende der Querlenkerstrebe angeordnet ist und der zweite Kinematikpunkt an dem radträgerseitigen Ende der Querlenkerstrebe. Die Kinematikpunkte an den karosserieseitigen Enden der beiden Querlenkerstreben weisen dieselbe Orientierung auf, d. h. die Drehachsen der gelenkigen Lagerung sind parallel oder koaxial zueinander. Die Kinematikpunkte an den karosserieseitigen Enden der beiden Querlenkerstreben liegen in einer Konstruktionslage in einer Ebene. Beispielsweise können die Kinematikpunkte an den karosserieseitigen Enden der beiden Querlenkerstreben als Drehgelenke ausgeführt sein.

Eine gelenkige Verbindung zweier Bauelemente bezeichnet eine Verbindung der beiden Bauelemente mittels eines Gelenks so, dass die beiden Bauelemente um mindestens eine Drehachse relativ zueinander verdreht werden können. Es sind also gelenkige Verbindungen um genau eine Drehachse, um genau zwei Drehachsen und um genau drei Drehachsen möglich. Eine gelenkige Verbindung lässt keine translatorische Bewegung der beiden Bauelemente relativ zueinander zu.

Wenigstens eine der zwei Querlenkerstreben weist eine bauraumangepasste Krümmung in eine Raumrichtung auf, diese Raumrichtung ist eine Hochachse zu einer Ebene, die durch die wenigstens drei Kinematikpunkte aufgespannt wird. Als Raumrichtung sind die Richtungsachsen eines kartesischen Koordinatensystems zu verstehen, d. h. die x-, y-, und z-Achsen. Die Kinematikpunkte der beiden Querlenkerstreben spannen die Ebene auf. Auf dieser Ebene ist die Raumrichtung, in die die wenigstens eine Querlenkerstrebe gekrümmt ist, beispielsweise senkrecht. In anderen Worten ist die Raumrichtung eine Hochachse, z. B. die z-Achse. Beispielsweise ist, bei der Verwendung des Querlenkers in der Achsanordnung eines Fahrzeugs, die Raumrichtung in Konstruktionslage senkrecht zu einer Fahrbahnebene.

Als eine Krümmung ist eine gebogene Ausformung der wenigstens einen Querlenkerstrebe zu verstehen, die ein Maximum aufweist. Dieses Maximum weist von sämtlichen Bereichen des Querlenkers den größten Abstand zu der Ebene auf, die durch die wenigstens drei Kinematikpunkte aufgespannt wird. Dieses Maximum weist zudem bei der Verwendung des Querlenkers in der Achsanordnung eines Fahrzeugs von sämtlichen Bereichen des Querlenkers den größten Abstand zu einer Fahrbahnebene auf.

Unter einer bauraumangepassten Krümmung der wenigstens einen Querlenkerstrebe ist eine Krümmung zu verstehen, die bezüglich eines für eine Achsanordnung eines Fahrzeugs vorhandenen Bauraums derart ausgestaltet ist, dass keine Konflikte, z. B. Kollisionen, mit weiteren Bauelementen der Achsanordnung entstehen, weder in Konstruktionslage noch in einem Fahrzeugbetriebszustand. Des Weiteren führt die bauraumangepasste Krümmung nicht zu Einbußen bezüglich der Bauelementstabilität und Bauelementkinematik des Querlenkers. Die Krümmung ist derart ausgestaltet, dass ein materialfreier Bereich geschaffen wird, durch welchen weitere Bauelemente der Achsanordnung eines Fahrzeugs hindurchgeführt werden können. Vorteilhaft ist hierbei, dass der Querlenker und wenigstens ein weiteres Bauelement der Achsanordnung des Fahrzeugs räumlich eng angeordnet werden können, so dass ein geringerer Bauraumbedarf entsteht als bei einem vollständig eben ausgestaltetem Querlenker.

Nach einer Ausführungsform ist die Ausformung der Krümmung der wenigstens einen Querlenkerstrebe festgelegt durch einen Bauraumbedarf eines Bauelements der Achsanordnung, welches in einem Teilbereich unterhalb der Krümmung der wenigstens einen Querlenkerstrebe geführt wird. In anderen Worten überspannt die bauraumangepasste Krümmung der wenigstens einen Querlenkerstrebe einen Teilbereich des einen Bauelements der Achsanordnung. Der materialfreie Bereich der durch die Krümmung der wenigstens einen Querlenkerstrebe geschaffen wird, ist hierbei derart dimensioniert, dass dasjenige Bauelement der Achsanordnung, welches unterhalb der bauraumangepassten Krümmung der wenigstens einen Querlenkerstrebe geführt wird, auch bei einem Fahrzeugbetriebszustand nicht mit dem Querlenker kollidiert. Die Ausformung der Krümmung richtet sich in anderen Worten nach dem Bauraumbedarf desjenigen Bauelements oder derjenigen Bauelemente der Achsanordnung des Fahrzeugs in einem Fahrzeugbetriebszustand, dessen oder deren Teilbereich von der Krümmung überspannt wird. Beispielsweise ist hierbei ein mögliches Einfedern des Bauelements oder der Bauelemente zu berücksichtigen.

Nach einer weiteren Ausführungsform sind beide Querlenkerstreben an ihren radträgerseitigen Enden starr miteinander verbunden, wobei der Querlenker als ein Dreiecksquerlenker ausgeformt ist. Beide Querlenkerstreben sind somit derart miteinander verbunden, dass sie ein einstückiges Bauelement ausbilden. Ein einstückiges Bauelement ist aus einem Stück ausgeformt und kann nicht zerstörungsfrei getrennt werden.

Nach einer weiteren Ausführungsform weisen die beiden Querlenkerstreben an ihren verbundenen radträgerseitigen Enden einen der wenigstens drei Kinematikpunkte auf. Dieser gemeinsame Kinematikpunkt der beiden Querlenkerstreben dient bei der Verwendung des Querlenkers in der Achsanordnung eines Fahrzeugs zur gelenkigen Verbindung des Querlenkers mit dem Radträger der Achsanordnung. Dieser Kinematikpunkt kann beispielsweise als ein Drehgelenk ausgeformt sein. Der radträgerseitige Kinematikpunkt der Querlenkerstreben ist hierbei räumlich anders orientiert als die zwei der wenigstens drei Kinematikpunkte, die an den karosserieseitigen Enden der Querlenkerstreben angeordnet sind. In anderen Worten ist die Drehachse des radträgerseitigen Kinematikpunktes beispielsweise entweder senkrecht oder schräg zu den Drehachsen der karosserieseitigen Kinematikpunkte orientiert.

Nach einer weiteren Ausführungsform ist der Querlenker als ein aufgelöster Dreiecksquerlenker ausgeformt, wobei der Querlenker wenigstens vier Kinematikpunkte aufweist. Jede der beiden Querlenkerstreben weist an ihrem radträgerseitigen Ende einen der wenigstens vier Kinematikpunkte auf. Hierbei weist die erste der zwei Querlenkerstreben an ihrem radträgerseitigen Ende einen der wenigstens vier Kinematikpunkte auf. Die zweite der zwei Querlenkerstreben weist an ihrem radträgerseitigen Ende einen anderen der wenigstens vier Kinematikpunkt auf. Jede Querlenkerstrebe erstreckt sich somit von einem Kinematikpunkt an ihrem radträgerseitigen Ende zu einem Kinematikpunkt an ihrem karosserieseitigen Ende. Der Querlenker weist somit wenigstens vier Kinematikpunkte auf. Die Querlenkerstreben sind an ihren radträgerseitigen Enden voneinander getrennt. Beide Querlenkerstreben sind unabhängig voneinander mittels ihrer jeweiligen Kinematikpunkte gelenkig mit dem Radträger verbunden.

Nach einer weiteren Ausführungsform weist jede der beiden Querlenkerstreben eine bauraumangepasste Krümmung in eine Raumrichtung auf, wobei beide Querlenkerstreben in dieselbe Raumrichtung gekrümmt sind. Beide Querlenkerstreben sind beispielsweise voneinander verschieden ausgeformt, jedoch sind sie in dieselbe Raumrichtung gekrümmt. Die erste der zwei Querlenkerstreben weist eine erste Krümmung mit einem ersten Maximum auf. Die zweite der zwei Querlenkerstreben weist eine zweite Krümmung mit einem zweiten Maximum auf.

Beispielsweise können beide Querlenkerstreben die gleiche Krümmung aufweisen. Alternativ dazu können beide Querlenkerstreben eine voneinander unterschiedliche Krümmung aufweisen. Gleiche Krümmungen haben den gleichen Verlauf der Krümmung betrachtet über die Längserstreckung der Querlenkerstrebe von ihrem radträgerseitigen zu ihrem karosserieseitigen Ende hin. Beispielsweise kann das Maximum der ersten Querlenkerstrebe näher an der Ebene angeordnet sein, die die wenigstens drei Kinematikpunkte aufspannen, als das Maximum der zweiten Querlenkerstrebe. Selbstverständlich das Maximum der zweiten Querlenkerstrebe näher an der Ebene angeordnet sein, die die wenigstens drei Kinematikpunkte aufspannen, als das Maximum der ersten Querlenkerstrebe. Durch die gekrümmte Ausformung beider Querlenkerstreben kann jede der zwei Querlenkerstreben wenigstens ein Bauelement der Achsanordnung überspannen.

Eine Achsanordnung mit einem Querlenker, der im vorherigen beschrieben wurde, weist eine Spurstange auf, die in einem Teilbereich unterhalb der bauraumangepassten Krümmung der wenigstens einen Querlenkerstrebe geführt wird. Unter einer Spurstange ist ein Bestandteil eines Lenkmechanismus zu verstehen. Diese dient dazu, ein Lenkmoment auf den Radträger zu übertragen. Beim Lenken vollzieht die Spurstange eine translatorische Bewegung und/ oder eine Verschiebung wenigstens teilweise in Fahrzeugquerrichtung. Beim Lenken gibt es also eine Bewegungskomponente der Spurstange, die in Fahrzeugquerrichtung verläuft. Unter Fahrzeugquerrichtung ist eine Richtung orthogonal zur Fahrzeuglängsrichtung zu verstehen, die zu dem horizontal verläuft. Die Fahrzeuglängsrichtung stimmt mit der Fahrtrichtung beim Geradeausfahren überein.

Die Spurstange ist hierbei z. B. handelsüblich ausgeformt. Die bauraumangepasste Krümmung der wenigstens einen Querlenkerstrebe richtet sich somit nach dem Bauraumbedarf der Spurstange. In anderen Worten ist der materialfreie Bereich, der durch die Krümmung der Querlenkerstrebe geschaffen wird, orientiert an einer Bewegung, die die Spurstange während eines Fahrzeugbetriebszustandes durchführen kann. Die Krümmung ist derart ausgestaltet, dass z. B. bei einem Einfedern der Spurstange, dieselbe nicht mit dem Querlenker kollidieren kann.

Anhand der im Folgenden erläuterten Figuren werden ein Ausführungsbeispiel und Details der Erfindung näher beschrieben. Es zeigen:
- Fig. 1: eine schematische Darstellung eines Querlenkers mit einer gekrümmten Querlenkerstrebe nach einem Ausführungsbeispiel,
- Fig. 2: eine schematische Darstellung des Querlenkers mit der gekrümmten Querlenkerstrebe nach dem Ausführungsbeispiel aus Fig. 1 mit einer unter der Querlenkerstrebe hindurch geführten Spurstange.

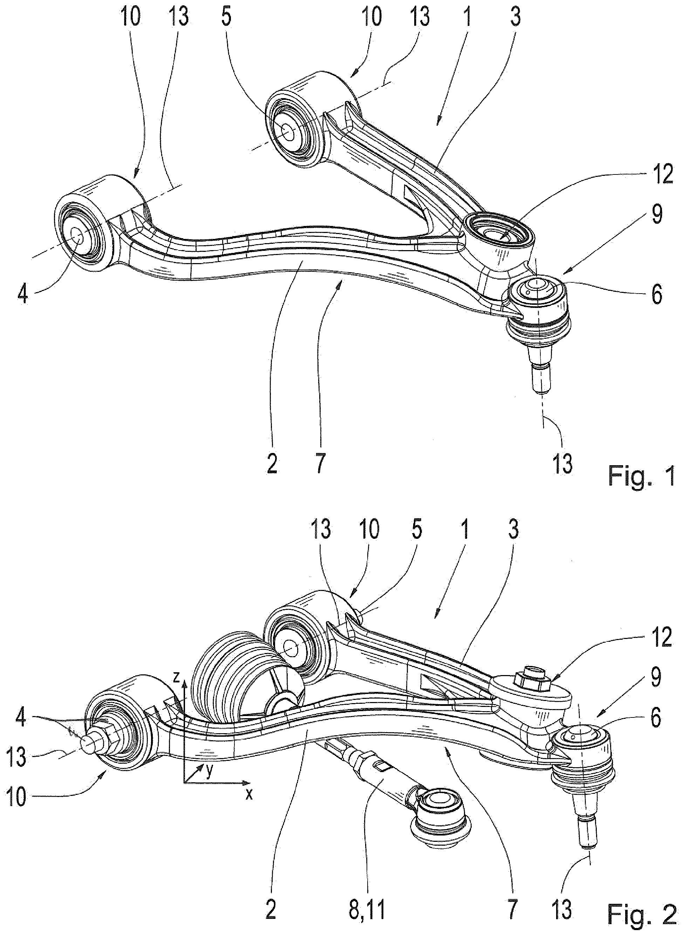

Fig. 1 zeigt eine schematische Darstellung eines Querlenkers 1 mit einer gekrümmten Querlenkerstrebe 2 nach einem Ausführungsbeispiel. Der Querlenker 1 weist zwei voneinander unterschiedlich ausgeformte Querlenkerstreben 2, 3 auf. Eine erste Querlenkerstrebe 2 weist ein erstes karosserieseitiges Ende 10 auf. Eine zweite Querlenkerstrebe 3 weist ein zweites karosserieseitiges Ende 10 auf. Beide Querlenkerstreben 2, 3 sind radträgerseitig miteinander verbunden. Ein karosserieseitiges Ende 10 stützt sich bei einer Verwendung des Querlenkers 1 in einer Achsanordnung eines Fahrzeugs beispielsweise an einer Fahrzeugkarosserie ab. Ein radträgerseitiges Ende 9 stützt sich bei einer Verwendung des Querlenkers 1 in einer Achsanordnung eines Fahrzeugs an einem Radträger der Achsanordnung ab. Die erste Querlenkerstrebe 2 wird somit von dem ersten karosserieseitigen Ende 10 und dem radträgerseitigen Ende 9 begrenzt. Die zweite Querlenkerstrebe 3 wird somit von dem zweiten karosserieseitigen Ende 10 und dem radträgerseitigen Ende 9 begrenzt. Der Querlenker 1 ist als Dreiecksquerlenker ausgeformt.

Die erste Querlenkerstrebe 2 weist eine Krümmung 7 auf. Die zweite Querlenkerstrebe 3 ist eben ausgestaltet. Die Krümmung 7 der ersten Querlenkerstrebe 2 erfolgt in eine Raumrichtung, hier in Richtung einer Hochachse. Die Hochachse wird in einem kartesischen Koordinatensystem als z-Achse bezeichnet. Im Vergleich zu der zweiten Querlenkerstrebe 3, welche in Richtung der Hochachse eben verläuft, d. h. keine Krümmung, Kröpfung oder Biegung aufweist, weist die erste Querlenkerstrebe 2 in Richtung der Hochachse ein Maximum auf.

Der Querlenker 1 weist drei Kinematikpunkte 4, 5, 6 auf. Ein Kinematikpunkt 4, 5, 6 ist hierbei derjenige Bereich des Querlenkers 1, an welchem dieser Querlenker 1 mit anderen Bauelementen der Achsanordnung und/ oder des Fahrzeugs gelenkig verbunden werden kann, wenn der Querlenker 1 in der Achsanordnung eines Fahrzeugs verwendet wird. Die erste Querlenkerstrebe 2 weist an ihrem karosserieseitigen Ende 10 einen ersten Kinematikpunkt 4 auf. Die zweite Querlenkerstrebe 3 weist an ihrem karosserieseitigen Ende 10 einen zweiten Kinematikpunkt 5 auf. Die erste Querlenkerstrebe 2 und die zweite Querlenkerstrebe 3 weisen an ihrem verbundenen radträgerseitigen Ende 9 einen dritten Kinematikpunkt 6 auf. Die Kinematikpunkte 4, 5 an den karosserieseitigen Enden 10 der beiden Querlenkerstreben 2, 3 weisen dieselbe Orientierung auf, d. h. die Drehachsen 13 der gelenkigen Lagerung sind koaxial zueinander. Die Kinematikpunkte 4, 5 an den karosserieseitigen Enden 10 der beiden Querlenkerstreben 2, 3 liegen in der hier dargestellten Konstruktionslage in einer Ebene. Die Kinematikpunkte 4, 5 an den karosserieseitigen Enden 10 der beiden Querlenkerstreben 2, 3 sind als Drehgelenke ausgeführt.

Der Kinematikpunkt 6 an dem radträgerseitigen Ende 9 des Querlenkers 1 ist in eine andere Richtung orientiert als die Kinematikpunkte 4, 5, an den karosserieseitigen Enden 10. Die Drehachse 13 dieses dritten Kinematikpunktes 6 an dem radträgerseitigen Ende 9 ist schräg, d. h. windschief, zu den Drehachsen 13 der beiden Kinematikpunkte 4, 5 an den karosserieseitigen Enden 10 der Querlenkerstreben 2, 3 angeordnet und zu der Ebene, in der der erste Kinematikpunkt 4 und der zweite Kinematikpunkt 5 liegen, nahezu senkrecht. Der dritte Kinematikpunkt 6 ist als ein Kugelgelenk ausgeformt.

Die drei Kinematikpunkte 4, 5, 6 spannen eine Ebene auf. Die erste Querlenkerstrebe 2 überspannt diese Ebene. Durch den materialfreien Raum, der durch die Krümmung 7 des Querlenkers 1 geschaffen wird, kann unterhalb dieser Krümmung 7, d. h. in dem Bereich, den die gekrümmte Querlenkerstrebe 2 überspannt, beispielsweise ein Bauelement der Achsanordnung angeordnet werden. Dies wird in Fig. 2 näher beschrieben. Durch die Krümmung 7 der ersten Querlenkerstrebe 2 wird die Stabilität des Querlenkers 2 nicht negativ beeinflusst.

Der Querlenker 1 weist zudem einen Koppelungsbereich 12 auf. Mittels dieses Koppelungsbereichs 12 kann der Querlenker 1 bei einer Verwendung des Querlenkers 1 in einer Achsanordnung eines Fahrzeugs mit einem weiteren Bauelement der Achsanordnung gekoppelt werden.

Fig. 2 zeigt eine schematische Darstellung des Querlenkers 1 mit der gekrümmten Querlenkerstrebe 2 nach dem Ausführungsbeispiel aus Fig. 1 mit einer unter der Querlenkerstrebe 2 hindurch geführten Spurstange 11. Die Spurstange 11 ist ein Bauelement 8 einer Achsanordnung, in welcher der Querlenker 1 Verwendung findet. Dargestellt ist der Querlenker 1 aus Fig. 1 in Konstruktionslage. Die Spurstange 11 ist in einem Teilbereich unterhalb der ersten Querlenkerstrebe 2 angeordnet. In anderen Worten überspannt die erste Querlenkerstrebe 2 mit ihrer Krümmung 7 die Spurstange 11 in einem Teilbereich.

Bei einem Fahrbetrieb des Fahrzeugs in dem der Querlenker 1 verwendet wird, kann sich die Spurstange 11 bewegen, z. B. kann diese einfedern. Der materialfreie Bereich, der durch die Krümmung 7 der ersten Querlenkerstrebe 2 geschaffen ist, ist derart ausgestaltet, dass bei einer Bewegung der Spurstange 11 diese nicht mit der ersten Querlenkerstrebe 2 und/ oder mit den übrigen Elementen des Querlenkers 1 kollidiert. Auch bei einer Bewegung des Querlenkers 1 findet keine Kollision mit der Spurstange 11 statt. In anderen Worten richtet sich die Ausformung der Krümmung 7 der ersten Querlenkerstrebe 2 nach dem Bauraumbedarf der Spurstange 11, die von der ersten Querlenkerstrebe 2 in einem Teilbereich überspannt wird, sowohl in einer Ruhelage als auch in einem Fahrbetrieb des Fahrzeugs, welches den Querlenker 1 in einer Achsanordnung verwendet. Durch die derartige Anordnung des Querlenkers 1 und der Spurstange 11 zueinander kann der für die Achsanordnung zur Verfügung stehende Bauraum optimiert genutzt werden. Die Spurstange 11 und der Querlenker 1 können eng zueinander angeordnet werden. Im Vergleich zu einem herkömmlichen Querlenker 1, dessen Querlenkerstreben 2, 3 keine Krümmung 7 aufweisen, wird der vorhandene Bauraum besser ausgenutzt und benötigter Bauraum reduziert.

Die hier dargestellten Ausführungsbeispiele sind nur beispielhaft gewählt. Beispielsweise kann statt nur der ersten Querlenkerstrebe auch die zweite Querlenkerstrebe eine Krümmung in eine Raumrichtung, d. h. in Richtung einer Hochachse aufweisen. Die erste und die zweite Querlenkerstrebe können dabei den gleichen Abstand ihres Maximums zu der Ebene aufweisen, die durch die drei Kinematikpunkte aufgespannt wird. Alternativ dazu können die beiden Querlenkerstreben einen unterschiedlichen Abstand ihres Maximums zu der Ebene aufweisen, die durch die drei Kinematikpunkte aufgespannt wird. Beispielsweise kann ein Teilbereich eines anderen Bauelements der Achsanordnung von der ersten Querlenkerstrebe überspannt werden. Beispielsweise können bei zwei gekrümmten Querlenkerstreben Teilbereiche mehrerer Bauelemente der Achsanordnung von der ersten Querlenkerstrebe und von der zweiten Querlenkerstrebe überspannt werden. Des Weiteren kann der Querlenker als ein aufgelöster Dreiecksquerlenker ausgeformt sein. In diesem Fall weisen die erste Querlenkerstrebe einen Kinematikpunkt an ihrem karosserieseitigen Ende und einen weiteren Kinematikpunkt an ihrem radträgerseitigen Ende, sowie die zweite Querlenkerstrebe einen Kinematikpunkt an ihrem karosserieseitigen Ende und einen weiteren Kinematikpunkt an ihrem radträgerseitigen Ende auf. Der Querlenker weist somit vier Kinematikpunkte auf. Außerdem können die Kinematikpunkte durch andere Gelenke als Drehgelenke ausgeformt sein.

### Bezuaszeichen

- 1: Querlenker
- 2: erste Querlenkerstrebe
- 3: zweite Querlenkerstrebe
- 4: erster Kinematikpunkt
- 5: zweiter Kinematikpunkt
- 6: dritter Kinematikpunkt
- 7: Krümmung
- 8: Bauelement
- 9: radträgerseitiges Ende
- 10: karosserieseitiges Ende
- 11: Spurstange
- 12: Koppelungsbereich
- 13: Drehachse

## Patentansprüche

1. Achsanordnung für ein Fahrzeug mit einem Querlenker (1), der zwei Querlenkerstreben (2, 3) und wenigstens drei Kinematikpunkte (4, 5, 6) umfasst, wobei jede der zwei Querlenkerstreben (2, 3) ein radträgerseitiges Ende (9) und ein karosserieseitiges Ende (10) aufweist, wobei wenigstens eine der zwei Querlenkerstreben (2, 3) eine Krümmung (7) in eine Raumrichtung aufweist, wobei diese Raumrichtung eine Hochachse zu einer Ebene ist, die durch die wenigstens drei Kinematikpunkte (4, 5, 6) aufgespannt wird,
**gekennzeichnet durch** eine Spurstange (11), die in einem Teilbereich unterhalb der Krümmung (7) der wenigstens einen Querlenkerstrebe (2, 3) geführt wird.

2. Achsanordnung nach Anspruch 1, **dadurch gekennzeichnet, dass** jede Querlenkerstrebe (2, 3) an ihrem karosserieseitigen Ende (10) einen der wenigstens drei Kinematikpunkte (4, 5, 6) aufweist.

3. Achsanordnung nach einem der vorherigen Ansprüche, **dadurch gekennzeichnet, dass** die Ausformung der Krümmung (7) der wenigstens einen Querlenkerstrebe (2, 3) festgelegt ist durch einen Bauraumbedarf eines Bauelements (8) der Achsanordnung, welches in einem Teilbereich unterhalb der Krümmung (7) der wenigstens einen Querlenkerstrebe (2, 3) geführt wird.

4. Achsanordnung nach einem der vorherigen Ansprüche, **dadurch gekennzeichnet, dass** beide Querlenkerstreben (2, 3) an ihren radträgerseitigen Enden (9) starr miteinander verbunden sind, wobei der Querlenker (1) als ein Dreiecksquerlenker ausgeformt ist.

5. Achsanordnung nach Anspruch 4, **dadurch gekennzeichnet, dass** die beiden Querlenkerstreben (2, 3) an ihren verbundenen radträgerseitigen Enden (9) einen der wenigstens drei Kinematikpunkte (4, 5, 6) aufweisen.

6. Achsanordnung nach einem der Ansprüche 1 bis 3, **dadurch gekennzeichnet, dass** der Querlenker (1) als ein aufgelöster Dreiecksquerlenker ausgeformt ist, wobei der Querlenker (1) wenigstens vier Kinematikpunkte (4, 5, 6) aufweist, wobei jede der beiden Querlenkerstreben (2, 3) an ihrem radträgerseitigen Ende (9) einen der wenigstens vier Kinematikpunkte (4, 5, 6) aufweist.

7. Achsanordnung nach einem der vorherigen Ansprüche, **dadurch gekennzeichnet, dass** jede der beiden Querlenkerstreben (2, 3) eine Krümmung (7) in eine Raumrichtung aufweist, wobei beide Querlenkerstreben (2, 3) in dieselbe Raumrichtung gekrümmt sind.

## Claims

1. Axle assembly for a vehicle having a crosslink (1) which comprises two crosslink struts (2, 3) and at least three kinematic points (4, 5, 6), wherein each of the two crosslink struts (2, 3) has a wheel-carrier-side end (9) and a body-side end (10), wherein at least one of the two crosslink struts (2, 3) has a curvature (7) in a spatial direction, wherein this spatial direction is a vertical axis to a plane which is defined by the at least three kinematic points (4, 5, 6),
**characterized by** a track rod (11) which is guided in a subregion below the curvature (7) of the at least one crosslink strut (2, 3).

2. Axle assembly according to Claim 1, **characterized in that** each crosslink strut (2, 3) has one of the at least three kinematic points (4, 5, 6) at its body-side end (10).

3. Axle assembly according to either of the preceding claims, **characterized in that** the formation of the curvature (7) of the at least one crosslink strut (2, 3) is determined by an installation space requirement of a component (8) of the axle assembly that is guided in a subregion below the curvature (7) of the at least one crosslink strut (2, 3).

4. Axle assembly according to one of the preceding claims, **characterized in that** both crosslink struts (2, 3) are rigidly connected to one another at their wheel-carrier-side ends (9), wherein the crosslink (1) is formed as a triangular crosslink.

5. Axle assembly according to Claim 4, **characterized in that** the two crosslink struts (2, 3) have one of the at least three kinematic points (4, 5, 6) at their connected wheel-carrier-side ends (9).

6. Axle assembly according to one of Claims 1 to 3, **characterized in that** the crosslink (1) is formed as a divided triangular crosslink, wherein the crosslink (1) has at least four kinematic points (4, 5, 6), wherein each of the two crosslink struts (2, 3) has one of the at least four kinematic points (4, 5, 6) at its wheel-carrier-side end (9).

7. Axle assembly according to one of the preceding claims, **characterized in that** each of the two crosslink struts (2, 3) has a curvature (7) in a spatial direction, wherein both crosslink struts (2, 3) are curved in the same spatial direction.

## Revendications

1. Agencement d'essieu destiné à un véhicule et comprenant un bras oscillant transversal (1), qui comporte deux entretoises de bras oscillant transversal (2, 3) et au moins trois points cinématiques (4, 5, 6), chacune des deux entretoises de bras oscillant transversal (2, 3) comportant une extrémité côté support de roue (9) et une extrémité côté carrosserie (10), l'un au moins des deux entretoises de bras oscillant transversal (2, 3) présentant une incurvation (7) dans une direction spatiale, cette direction spatiale étant un axe vertical par rapport à un plan qui passe par au moins les trois points cinématiques (4, 5, 6),
**caractérisé par** une barre d'accouplement (11) qui est guidée dans une région située au-dessous de l'incurvation (7) de l'au moins un membre (2, 3).

2. Agencement d'essieu selon la revendication 1, **caractérisé en ce que** chaque entretoise de bras oscillant transversal (2, 3) comporte à son extrémité côté carrosserie (10) l'un des au moins trois points cinématiques (4, 5, 6).

3. Agencement d'essieu selon l'une des revendications précédentes, **caractérisé en ce que** la formation de l'incurvation (7) de l'au moins une entretoise de bras oscillant transversal (2, 3) est déterminée par l'encombrement d'un composant (8) de l'agencement d'essieu qui est guidé dans une région située sous l'incurvation (7) d'au moins une entretoise de bras oscillant transversal (2, 3).

4. Agencement d'essieu selon l'une des revendications précédentes, **caractérisé en ce que** les deux entretoises de bras oscillant transversal (2, 3) sont liés rigidement l'un à l'autre au niveau de leurs extrémités côté support de roue (9), le bras oscillant transversal (1) étant conçu comme un bras oscillant transversal triangulaire.

5. Agencement d'essieu selon la revendication 4, **caractérisé en ce que** les deux entretoises de bras oscillant transversal (2, 3) comportent, à leurs extrémités côté support de roue (9) qui sont reliées, l'un des au moins trois points cinématiques (4, 5, 6).

6. Agencement d'essieu selon l'une des revendications 1 à 3, **caractérisé en ce que** le bras oscillant transversal (1) est conçu comme un bras oscillant transversal triangulaire éclaté, le bras oscillant transversal (1) comportant au moins quatre points cinématiques (4, 5, 6), chacun des deux entretoises de bras oscillants transversal (2, 3) comportant, à son extrémité côté support de roue (9), l'un des au moins quatre points cinématiques (4, 5, 6).

7. Agencement d'essieu selon l'une des revendications précédentes, **caractérisé en ce que** chacune des deux entretoises de bras oscillant transversal (2, 3) présente une incurvation (7) dans une direction spatiale, les deux entretoises de bras oscillant transversal (2, 3) étant incurvés dans la même direction spatiale.
